# EUROPEAN PATENT SPECIFICATION

(11) **EP 4 411 149 B1**
(45) Date of publication and mention of the grant of the patent: **10.12.2025**
(21) Application number: 23154891.8
(22) Date of filing: 03.02.2023
(51) Int. Cl.: F16B 5/02

(54) **AN ASSEMBLY**
ANORDNUNG
ENSEMBLE

(43) Date of publication of application: 07.08.2024
(73) Proprietor: VOLVO TRUCK CORPORATION, 405 08 Göteborg (SE)
(72) Inventor: SJÖHOLM, Martin, 352 50 Växjö (SE); RAMACHANDRA, Yogesh, 560021 Banaglore (IN)
(74) Representative: Valea AB

(56) References cited:
- DE-A1- 102014 007 213

## Description

### TECHNICAL FIELD

The disclosure relates generally to an assembly comprising a first member and a second member. In particular aspects, the disclosure relates to a bolt joint assembly and/or to a vehicle. The disclosure also relates to a method for forming an assembly. The disclosure can be applied in heavy-duty vehicles, such as trucks, buses, and construction equipment. Although the disclosure may be described with respect to a particular vehicle, the disclosure is not restricted to any particular vehicle.

### BACKGROUND

In many situations, it may be preferred to attach a first member to a second member. As a non-limiting example, it may be desired to connect a suspension link of a vehicle to an axle body of a vehicle. Such a connection may comprise a joint such as a bolt joint. However, irrespective of the type of joint used, although contemporary joints may be relatively strong in the axial direction, they may be less strong in a radial direction, viz a direction perpendicular to the axial direction. As such, it may be desired to connect a first member to a second member such that an appropriately high strength in a radial direction is obtained.

DE 10 2014 007213 A1 discloses an assembly including a sleeve.

### SUMMARY

According to a first aspect of the disclosure, there is provided an assembly comprising a first member and a second member. The assembly comprises an assembly opening extending through each one of the first and second members. The assembly opening extends in an axial direction along an axial opening axis as well as in a radial direction along a radial opening axis.

The first member comprises a first wall assembly at least partially enclosing the assembly opening. The first wall assembly comprises a first wall compression portion at least partially enclosing the assembly opening and at least partially facing the second member. The first wall assembly further comprises a first wall abutment portion at least partially enclosing the assembly opening and at least partially facing the axial opening axis. The first wall abutment portion is at least partially located at a larger radial distance from the axial opening axis than the first wall compression portion.

The second member comprises a second wall assembly at least partially enclosing the assembly opening. The second wall assembly comprises a second wall compression portion at least partially enclosing the assembly opening and at least partially facing the first member. The second wall assembly further comprises a second wall abutment portion at least partially enclosing the assembly opening and at least partially facing the axial opening axis. The second wall abutment portion is at least partially located at a larger radial distance from the axial opening axis than the second wall compression portion.

The assembly further comprises a locking assembly being at least partially located between the first wall assembly and the assembly opening and also being at least partially located between the second wall assembly and the assembly opening.

The locking assembly is such that when the first wall compression portion and the second wall compression portion are located at a predetermined distance from each other in the axial direction, the first wall compression portion and the second wall compression portion compress the locking assembly such that at least a contact portion of the locking assembly is bent towards and thereby abuts at least one of the first wall abutment portion and the second wall abutment portion.

The first aspect of the disclosure may seek to provide an appropriate connection between the first member and the second member in the radial direction. A technical benefit may include that the locking assembly, by virtue of e.g. the contact portion of the locking assembly participates in such a radial locking.

In some examples, including in at least one preferred example, optionally the locking assembly comprises a primary sleeve at least partially enclosing the assembly opening, preferably the primary sleeve is made of metal or a metal alloy. A technical benefit may include that the primary sleeve may contribute to a radial locking.

In some examples, including in at least one preferred example, optionally the primary sleeve and the contact portion form a unitary component. A technical benefit may include that a limited number of components may be needed, which in turn may facilitate installation of the locking assembly.

In some examples, including in at least one preferred example, optionally the locking assembly comprises a second locking member at least partially enclosing the primary sleeve. The second locking member transfers a load from the second wall compression portion to the contact portion when the first wall compression portion and the second wall compression portion are located at the predetermined distance from each other in the axial direction. A technical benefit may include that the second locking member may ensure that the contact portion of the locking assembly is appropriately bent towards and thereby abuts at least one of the first wall abutment portion and the second wall abutment portion.

In some examples, including in at least one preferred example, optionally the second locking member and the primary sleeve are separate components. A technical benefit may include that the second locking member may be adapted to move relative to the primary sleeve during installation of the locking member, thereby facilitating the bending of the contact portion.

In some examples, including in at least one preferred example, optionally the second locking member comprises a second contact portion of the locking assembly being bent towards and thereby abuts at least the second wall abutment portion and wherein the contact portion of the locking assembly is bent towards and thereby abuts at least the first wall abutment portion, when the first wall compression portion and the second wall compression portion are located at the predetermined distance from each other in the axial direction. A technical benefit may include that the locking assembly may have two contact zones, implying an appropriate strength of the locking assembly.

In some examples, including in at least one preferred example, optionally the second contact portion of the locking assembly abuts at least the second wall abutment portion at a second abutment zone and wherein the contact portion of the locking assembly abuts at least the first wall abutment portion at a first abutment zone. A smallest distance between the second abutment zone and the first abutment zone in the axial direction is greater than 30%, preferably greater than 50%, of the predetermined distance between the first wall compression portion and the second wall compression portion, when the first wall compression portion and the second wall compression portion are located at the predetermined distance from each other in the axial direction. A technical benefit may include an appropriate locking also against a possible rotation of the first member relative to the second member owing to the fact that there may be a relatively large distance between the second abutment zone and the first abutment zone.

In some examples, including in at least one preferred example, optionally the second locking member comprises a second contact portion of the locking assembly being bent towards and thereby abuts the contact portion and wherein the contact portion of the locking assembly is bent towards and thereby abuts each one of the first and second wall abutment portions, when the first wall compression portion and the second wall compression portion are located at a predetermined distance from each other in the axial direction. A technical benefit may include an appropriately strong locking since the locking assembly comprises two compression portions.

In some examples, including in at least one preferred example, optionally the locking assembly comprises a second contact portion, the locking assembly being such that when the first wall compression portion and the second wall compression portion are located at a predetermined distance from each other in the axial direction, the first wall compression portion and the second wall compression portion compress the locking assembly such that at least the contact portion of the locking assembly is bent towards and thereby abuts the first wall abutment portion and such that at least the second contact portion of the locking assembly is bent towards and thereby abuts the second wall abutment portion. A technical benefit may include an appropriately strong locking since the locking assembly comprises two compression portions, each one of which abutting at least each one of the first and second wall abutment portions.

In some examples, including in at least one preferred example, optionally the second contact portion of the locking assembly abuts at least the second wall abutment portion at a second abutment zone and wherein the contact portion of the locking assembly abuts at least the first wall abutment portion at a first abutment zone. A smallest distance between the second abutment zone and the first abutment zone being greater than 30%, preferably greater than 50%, of the predetermined distance between the first wall compression portion and the second wall compression portion, when the first wall compression portion and the second wall compression portion are located at the predetermined distance from each other in the axial direction. A technical benefit may include an appropriate locking also against a possible rotation of the first member relative to the second member owing to the fact that there may be a relatively large distance between the second abutment zone and the first abutment zone.

In some examples, including in at least one preferred example, optionally the contact portion and the second contact portion form a unitary component. A technical benefit may include that a limited number of components may be needed, which in turn may facilitate installation of the locking assembly.

In some examples, including in at least one preferred example, optionally the assembly comprises a first circular sector as well as a second circular sector, each one of which extending from the axial opening axis, wherein the first circular sector includes the contact portion but not the second contact portion and wherein the second circular sector includes the second contact portion but not the first contact portion. A technical benefit may include increased versatility in the radial locking between the first and second members.

In some examples, including in at least one preferred example, optionally the locking assembly comprises a radial lock for locking the contact portion to the second contact portion in at least the radial direction when the first wall compression portion and the second wall compression portion are located at the predetermined distance from each other in the axial direction. A technical benefit may include that the radial locking is appropriately strong.

In some examples, including in at least one preferred example, optionally the radial lock comprises a protrusion extending from one of the contact portion and the second contact portion as well as a recess into the other of the contact portion and the second contact portion, the protrusion being at least partially located in the recess when the first wall compression portion and the second wall compression portion are located at the predetermined distance from each other in the axial direction. A technical benefit may include an appropriate implementation of the radial locking.

In some examples, including in at least one preferred example, optionally the contact portion of the locking assembly is bent around a bending axle being perpendicular to the axial opening axis. A technical benefit may include that the locking assembly may be implemented in a cost efficient manner, for instance using sheet metal.

In some examples, including in at least one preferred example, optionally the contact portion of the locking assembly is bent around a bending axle being parallel to the axial opening axis. A technical benefit may include that the contact portion may be implemented in an appropriately compact fashion.

In some examples, including in at least one preferred example, optionally the contact portion comprises an annular member with a slit rendering the annular member discontinuous. The annular member is supported by the first wall compression portion. The locking assembly further comprises a mandrel adapted to contact the second wall compression portion and thereby force the contact portion towards the first wall abutment portion when the first wall compression portion and the second wall compression portion are located at the predetermined distance from each other in the axial direction. A technical benefit may include a strong radial locking requiring an appropriately small space.

In some examples, including in at least one preferred example, optionally the first member is an axle body of a vehicle and the second member is a suspension link of a vehicle. A technical benefit may include that the suspension link and the axle body are appropriately locked to each other.

According to a second aspect of the disclosure, there is provided a bolt joint assembly comprising an assembly according to the first aspect of the disclosure and a bolt joint with a bolt extending through the assembly opening. A technical benefit may include that the bolt joint may accommodate loads in the axial direction.

According to a third aspect of the disclosure, there is provided a vehicle comprising an assembly according to the first aspect of the disclosure and/or a bolt joint assembly according to the second aspect of the disclosure. A technical benefit may include that a first and second member of the vehicle are connected to each other in an appropriate manner.

According to a fourth aspect of the disclosure, there is provided a method for forming an assembly comprising a first member and a second member. The assembly comprises an assembly opening extending through each one of the first and second members. The assembly opening extends in an axial direction along an axial opening axis as well as in a radial direction along a radial opening axis.

The first member comprises a first wall assembly at least partially enclosing the assembly opening. The first wall assembly comprises a first wall compression portion at least partially enclosing the assembly opening and at least partially facing the second member. The first wall assembly further comprises a first wall abutment portion at least partially enclosing the assembly opening and at least partially facing the axial opening axis. The first wall abutment portion is at least partially located at a larger radial distance from the axial opening axis than the first wall compression portion.

The second member comprising a second wall assembly at least partially enclosing the assembly opening. The second wall assembly comprises a second wall compression portion at least partially enclosing the assembly opening and at least partially facing the first member. The second wall assembly further comprises a second wall abutment portion at least partially enclosing the assembly opening and at least partially facing the axial opening axis. The second wall abutment portion is at least partially located at a larger radial distance from the axial opening axis than the second wall compression portion.

The method comprises inserting a locking assembly at least partially between the first wall assembly and the assembly opening such that the locking assembly also is at least partially located between the second wall assembly and the assembly opening.

The method further comprises actuating a pressing tool for applying a force to at least one of the first and second members forcing the first wall compression portion and the second wall compression portion towards each other until they are located at a predetermined distance from each other in the axial direction, whereby the first wall compression portion and the second wall compression portion compress the locking assembly such that at least a contact portion of the locking assembly is bent towards and thereby abuts at least one of the first wall abutment portion and the second wall abutment portion.

The fourth aspect of the disclosure may seek to force the first member, the second member and the locking assembly into conditions so as to obtain a radial locking between the first and second member in a straightforward manner. For instance, the fourth aspect of the present disclosure implies a versatile method for forming an assembly since the method does not require the use of a bolt joint. As such, the first member, the second member and the locking assembly may be forced together with a force that is deemed appropriate for that operation without the need for taking an axial load obtainable from e.g. a bolt joint or the like into account. A technical benefit may include that radial locking may be obtained without necessarily having to take due account of the axial locking into account, which in turn implies a flexibility in when forming the assembly.

In some examples, including in at least one preferred example, optionally the method comprises arranging a guide rod at least partially into the assembly opening when actuating the pressing tool. A technical benefit may include that the guide rod may ensure an appropriate alignment between the first and second members during the forming of the assembly.

In some examples, including in at least one preferred example, optionally the method comprises inserting a bolt into the assembly opening after the contact portion of the locking assembly has been bent towards and thereby has abutted at least one of the first wall abutment portion and the second wall abutment portion. A technical benefit may include that the bolt may form part of a bolt joint that may provide an appropriate connection force in the axial direction. Moreover, inserting the bolt after the contact portion of the locking assembly has been bent towards and thereby has abutted at least one of the first wall abutment portion implies that the bolt joint need not contribute to compressing the locking assembly.

The above aspects, accompanying claims, and/or examples disclosed herein above and later below may be suitably combined with each other as would be apparent to anyone of ordinary skill in the art.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary illustration of a vehicle.
**FIG. 2** is an exemplary illustration of an assembly.
**FIG. 3** is an exemplary illustration of an assembly.
**FIG. 4** is an exemplary illustration of an assembly.
**FIGS. 5a** and **5b** are an exemplary illustrations of an assembly.
**FIG. 6** is an exemplary illustration of an assembly.
**FIG. 7** is an exemplary illustration of an assembly.
**FIGS. 8a** and **8b** are exemplary illustrations of a locking assembly.
**FIGS. 9a** and **9b** are exemplary illustrations of a locking assembly.
**FIGS. 10a** and **10b** are exemplary illustrations of an assembly.
**FIGS. 11a** and **11b** are exemplary illustrations of an assembly.
**FIG. 12** is an exemplary illustration of a bolt joint assembly.
**FIG. 13** is an exemplary flow chart illustrating an example of a method.

### DETAILED DESCRIPTION

Aspects set forth below represent the necessary information to enable those skilled in the art to practice the disclosure.

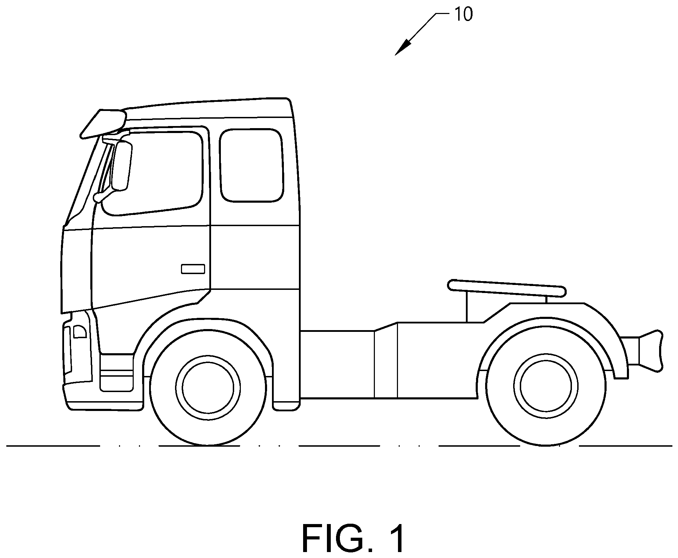

**FIG. 1** illustrates an exemplary vehicle in the form of a truck 10 such as the truck illustrated in Fig. 1. The truck 10 should be seen as an example of a vehicle which could comprise an assembly and/or a bolt joint assembly according to the present disclosure.

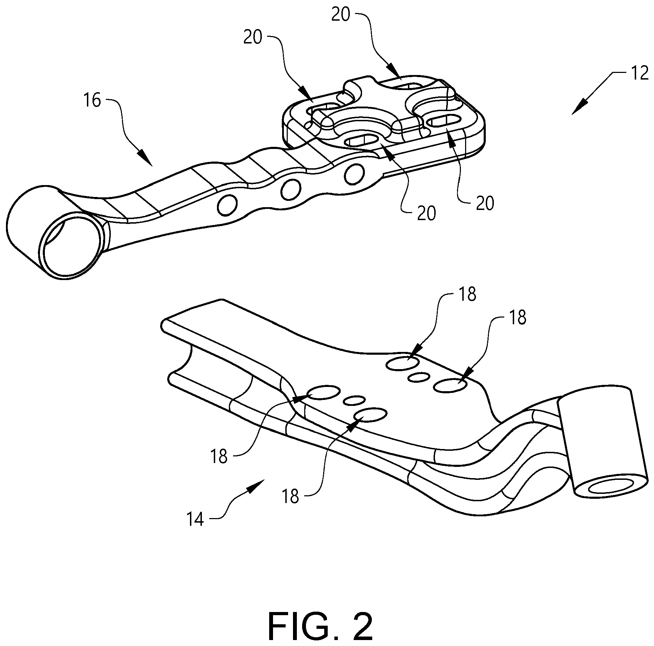

**FIG. 2** illustrates an exemplary assembly 12 according to the present disclosure. The Fig. 2 assembly 12 comprises a first member 14 and a second member 16. In Fig. 2, the first member 14 is exemplified as an axle body and the second member 16 is exemplified as a suspension link. However, it is also envisaged that the first and second members may be other type of members, for instance other types of members of a vehicle.

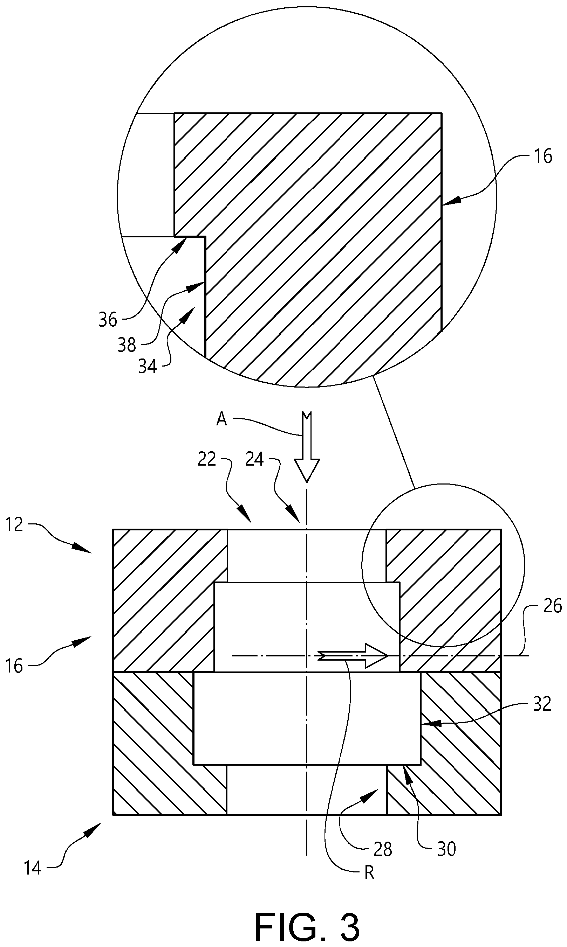

Irrespective of the examples of the first and second members 14, 16, it may be desired to connect the members to each other. For instance, the members 14, 16 may be connected to each other by means of a bolt joint with bolts (not shown in Fig. 2) extending through openings 18, 20 in each one of the first and second members 14, 16. Although a bolt joint may provide an appropriate strength in its axial direction A (see Fig. 3), viz a direction along the axial extension of the bolts, it is not certain that the bolt joint will provide an appropriate strength in the radial direction R (see Fig. 3), viz a direction perpendicular to the axial extension of one or more of the bolts.

In view of the above, the present disclosure aims at providing an appropriate strength in the radial direction between a first and a second member. Although, the presentation in the preceding paragraph discusses the strength in the radial direction in the context of a bolt joint, the present disclosure aims at providing an appropriate strength in the radial direction between a first and a second member 14, 16 also for assemblies not necessarily being joined by a bolt joint.

**FIG. 3** illustrates an exemplary assembly 12 comprising a first member 14 and a second member 16. The assembly 12 comprises an assembly opening 22 extending through each one of the first and second members 14, 16. The assembly opening 22 extends in an axial direction A along an axial opening axis 24 as well as in a radial direction R along a radial opening axis 26. Purely by way of example, each one of the first and second members 14, 16 may be made of metal, such as steel. The alternative for each one of the first and second members 14, 16 to be made of metal, such as steel, can be applicable for every possible example of the assembly 12 of the present disclosure.

The first member 14 comprises a first wall assembly 28 at least partially enclosing the assembly opening 22. The first wall assembly 28 comprises a first wall compression portion 30 at least partially enclosing the assembly opening 22 and at least partially facing the second member 16. The first wall assembly 28 further comprises a first wall abutment portion 32 at least partially enclosing the assembly opening 22 and at least partially facing the axial opening axis 24. The first wall abutment portion 32 is at least partially located at a larger radial distance, i.e. a distance in the radial direction R, from the axial opening axis 24 than the first wall compression portion 30.

Moreover, as indicated in Fig. 3, the second member 16 comprises a second wall assembly 34 at least partially enclosing the assembly opening 22. The second wall assembly 34 comprises a second wall compression portion 36 at least partially enclosing the assembly opening 22 and at least partially facing the first member 14. The second wall assembly 34 further comprises a second wall abutment portion 38 at least partially enclosing the assembly opening 22 and at least partially facing the axial opening axis 24. The second wall abutment portion 38 is at least partially located at a larger radial distance, i.e. a distance in the radial direction R, from the axial opening axis 24 than the second wall compression portion 36.

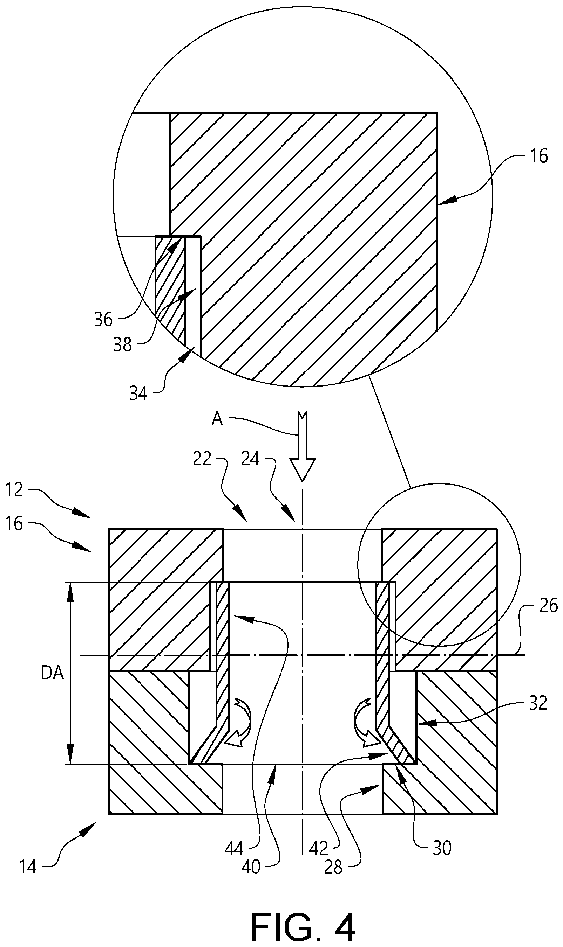

**FIG. 4** illustrates an exemplary assembly 12 wherein the assembly further comprises a locking assembly 40 being at least partially located between the first wall assembly 28 and the assembly opening 22 and also being at least partially located between the second wall assembly 34 and the assembly opening 22.

The locking assembly 40 is such that when the first wall compression portion 30 and the second wall compression portion 36 are located at a predetermined distance DA from each other in the axial direction A, the first wall compression portion 30 and the second wall compression portion 36 compress the locking assembly 40 such that at least a contact portion 42 of the locking assembly is 40 bent towards and thereby abuts at least one of the first wall abutment portion 32 and the second wall abutment portion 38. In the example illustrated in Fig. 4, the contact portion 42 of the locking assembly 40 is bent towards and thereby abuts the first wall abutment portion 32. However, in other examples of the disclosure, the contact portion 42 of the locking assembly 40 may be bent towards and thereby abut the second wall abutment portion 38. Moreover, in other examples of the disclosure, the contact portion 42 of the locking assembly 40 may be bent towards and thereby abut each one of the first wall abutment portion 32 and the second wall abutment portion 38.

In the example illustrated in Fig. 4, the predetermined distance DA corresponds to a condition in which at least a portion of the first member 14 abuts at least a portion of the second member 16. However, it is also contemplated that in other examples of the assembly 12, the predetermined distance DA may correspond to a condition in which there is a space between the first member 14 and the second member 16. Purely by way of example, it is contemplated that examples of the assembly may comprise a spacer (not shown) such as a washer (not shown) located between the first member 14 and the second member 16.

Moreover, the Fig. 4 example of the locking assembly 40 comprises a primary sleeve 44 at least partially enclosing the assembly opening 22. In the Fig. 4 example the locking assembly 40 comprises a primary sleeve 44 fully enclosing the assembly opening 22. The alternative for the primary sleeve 44 to fully enclose the assembly opening 22 can be applicable for every possible example of the locking assembly 40 and thus the assembly 12 of the present disclosure.

Purely by way of example, the primary sleeve 44 may be made of metal or a metal alloy.

In some examples, such as the example illustrated in Fig. 4, the primary sleeve 44 and the contact portion 42 may form a unitary component.

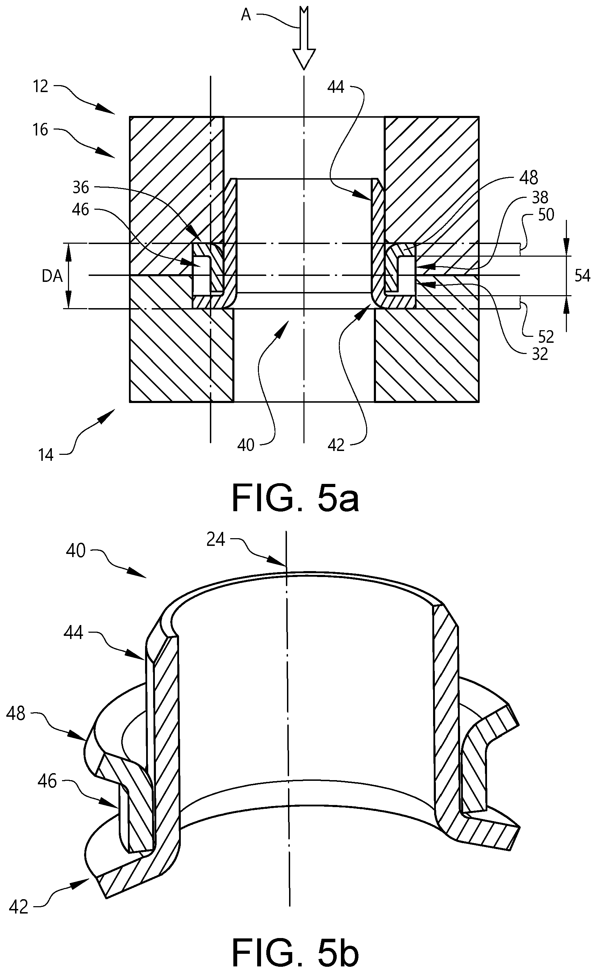

**FIGS. 5a** and **5b** illustrate an exemplary locking assembly 40 comprising a second locking member 46 at least partially enclosing the primary sleeve 44. The second locking member 46 transfers a load from the second wall compression portion 36 to the contact portion 42 when the first wall compression portion 30 and the second wall compression portion 36 are located at the predetermined distance from each other in the axial direction A. To this end, reference is made to Fig. 5a.

As may be gleaned from Fig. 5b, the second locking member 46 and the primary sleeve 44 may be separate components. Thus, as a non-limiting example, when the locking assembly 40 in Fig. 5b is not compressed between e.g. the first and second wall compression portions 30, 36, the second locking member 46 may be free to move relative to the primary sleeve 44 in at least one direction. Moreover, in the Fig. 5b example, the second locking member 46 fully encloses the primary sleeve 44. The alternative for the second locking member 46 to fully enclose the primary sleeve 44 can be applicable for every possible example of the locking assembly 40 and thus the assembly 12 of the present disclosure.

In some examples, with reference to Fig. 5a, the second locking member 46 may comprise a second contact portion 48 of the locking assembly being bent towards and thereby abutting at least the second wall abutment portion 38 and wherein the contact portion 42 of the locking assembly is bent towards and thereby abuts at least the first wall abutment portion 32 when the first wall compression portion 30 and the second wall compression portion 36 are located at the predetermined distance from each other in the axial direction A.

In some examples, again with reference to the example in Fig. 5a, the second contact portion 48 of the locking assembly 40 may abut at least the second wall abutment portion 38 at a second abutment zone 50 and wherein the contact portion 42 of the locking assembly 40 abuts at least the first wall abutment portion 32 at a first abutment zone 52. A smallest distance 54 between the second abutment zone 50 and the first abutment zone 52 in the axial direction A is greater than 30%, preferably greater than 50%, of the predetermined distance DA between the first wall compression portion 30 and the second wall compression portion 36, when the first wall compression portion 30 and the second wall compression portion 36 are located at the predetermined distance DA from each other in the axial direction A.

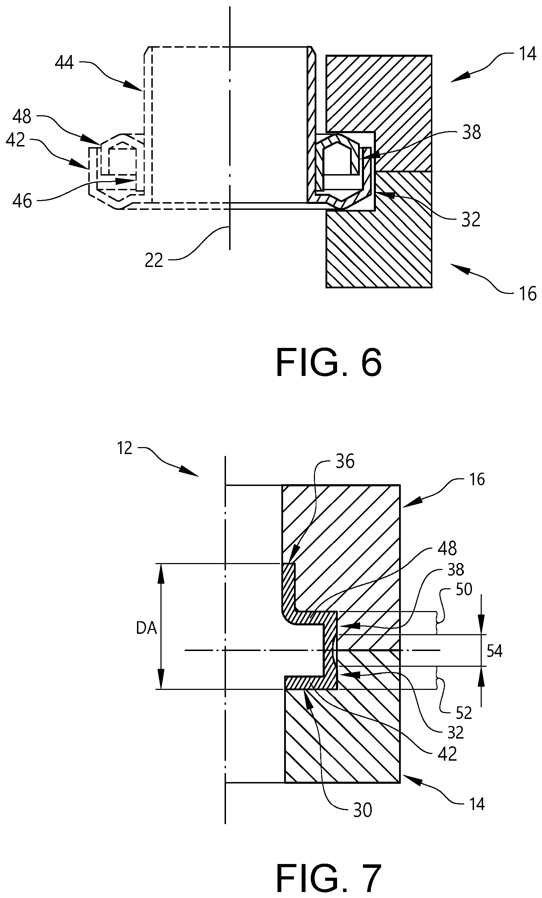

**FIG. 6** illustrates an exemplary locking assembly 40 in which the second locking member 46 may comprise a second contact portion 48 of the locking assembly being bent towards and thereby abuts the contact portion 42 and wherein the contact portion 42 of the locking assembly 40 is bent towards and thereby abuts each one of the first and second wall abutment portion 32, 38, when the first wall compression portion 30 and the second wall compression portion 36 are located at the predetermined distance DA from each other in the axial direction A. In the Fig. 6 example, the second locking member 46 and said primary sleeve 44 are separate components. Moreover, in Fig. 6, the portions of the first and second members 14, 16, are only illustrated on the right side of the axial opening axis 22.

**FIG. 7** illustrates the cross section of half an exemplary assembly 12 in which the locking assembly 40 may comprise a second contact portion 48. The locking assembly 40 may be such that when the first wall compression portion 30 and the second wall compression portion 36 are located at the predetermined distance DA from each other in the axial direction A, the first wall compression portion 30 and the second wall compression portion 36 compress the locking assembly such that at least the contact portion 42 of the locking assembly is bent towards and thereby abuts the first wall abutment portion 32 and such that at least the second contact portion 48 of the locking assembly is bent towards and thereby abuts the second wall abutment portion 38.

In some examples, as also exemplified in the Fig. 7 example, the second contact portion 48 of the locking assembly abuts at least the second wall abutment portion 38 at a second abutment zone 50 and wherein the contact portion 42 of the locking assembly abuts at least the first wall abutment portion 32 at a first abutment zone 52. A smallest distance 54 between the second abutment zone and the first abutment zone being greater than 30%, preferably greater than 50%, of the predetermined distance DA between the first wall compression portion 30 and the second wall compression portion 36, when the first wall compression portion 30 and the second wall compression portion 36 are located at the predetermined distance DA from each other in the axial direction A.

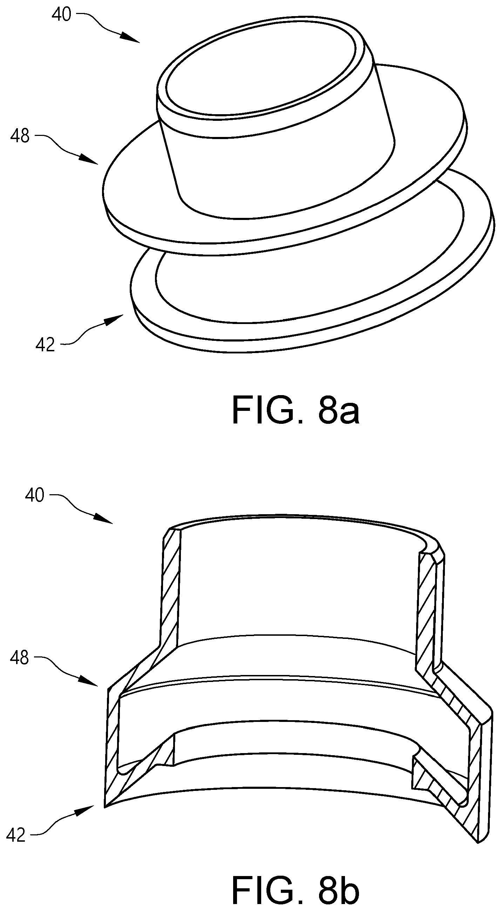

**FIGS. 8a and 8b** illustrate examples of the locking assembly 40 in which the contact portion 42 and the second contact portion 48 form a unitary component. As may be gleaned from Fig. 8a and 8b, in each one of the examples disclosed therein, each one of the contact portion 42 and the second contact portion 48 extends around the full circumference of the locking assembly 40.

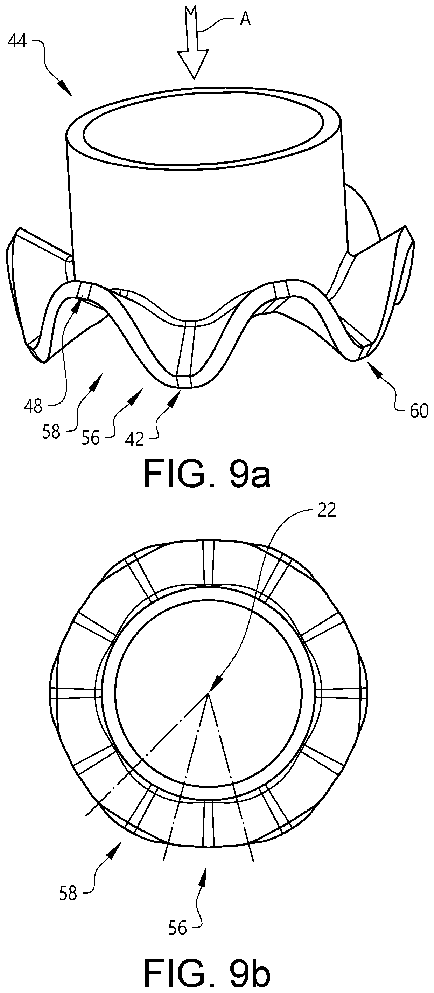

**FIGS. 9a and 9b** is a perspective view and a top view, respectively, of an example of the locking assembly 40 in which the locking assembly 40 comprises a first circular sector 56 as well as a second circular sector 58, each one of which extending from the axial opening axis 22, wherein the first circular sector 56 includes the contact portion 42 but not the second contact portion 48 and wherein the second circular sector 58 includes the second contact portion 48 but not the first contact portion 42. In the example illustrated in Fig. 9a, an edge 60 of the locking assembly 40 may be displaced up and down, as seen in the axial direction A, in accordance with for instance a periodic function, such as a square wave, along the circumference of the locking assembly 40.

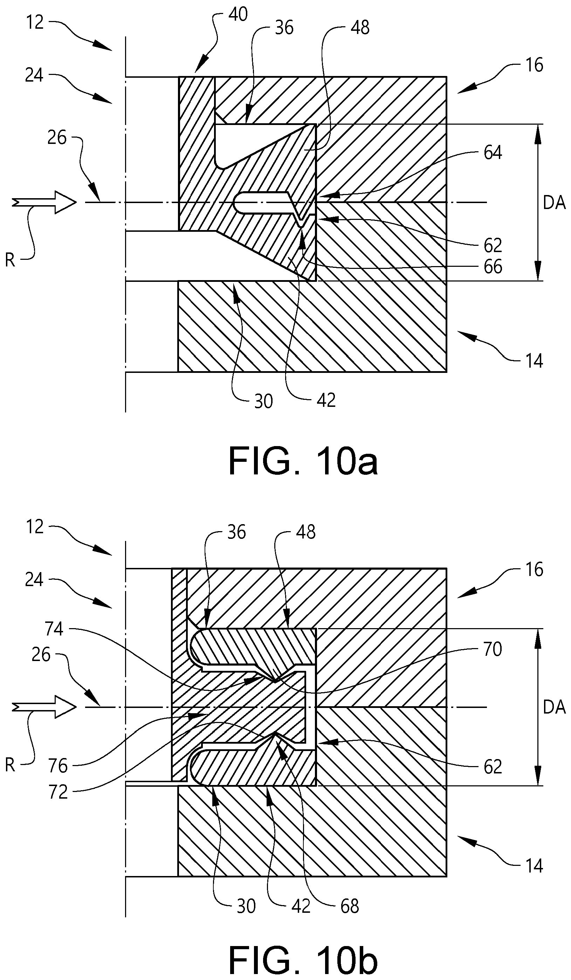

**FIG. 10a** illustrates an example in which the locking assembly 40 comprises a radial lock 62 for locking the contact portion 42 to the second contact portion 48 in at least the radial direction R when the first wall compression portion 30 and the second wall compression portion 36 are located at the predetermined distance from each other in the axial direction A.

In the examples of the locking assembly 40, such as the example illustrated in Fig. 10a, the radial lock 62 comprises a protrusion 64 extending from one of the contact portion 42 and the second contact portion 48 as well as a recess 66 into the other of the contact portion 42 and the second contact portion 48. In the example in Fig. 10a, the protrusion 64 extends from the second contact portion 48 and the recess 66 extends into the contact portion 42. The protrusion 64 is at least partially located in the recess 66 when the first wall compression portion 30 and the second wall compression portion 36 are located at the predetermined distance DA from each other in the axial direction A.

**FIG. 10b** illustrates another example of the radial lock 62 in which each one of the contact portion 42 comprises a first protrusion 68 and the second contact portion 48 comprises a second protrusion 70, each one of the first and second protrusions 68, 70 being located in a corresponding recess 72, 74 of an intermediate member 76 when the first wall compression portion 30 and the second wall compression portion 36 are located at the predetermined distance DA from each other in the axial direction A.

In the examples presented above, the contact portion 42 of the locking assembly 40 is bent around a bending axle being perpendicular to the axial opening axis 22. However, it is also possible that in examples of the locking assembly 40, the contact portion 42 thereof may be bent in other directions.

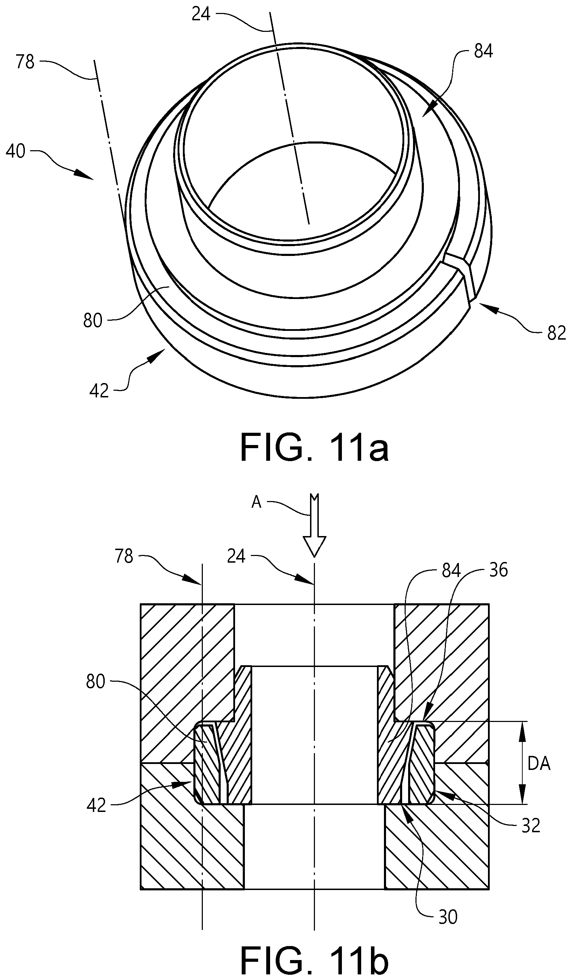

**FIGS. 11a and 11b** illustrate an example in which the contact portion 42 of the locking assembly 40 is bent around a bending axle 78 being parallel to the axial opening axis 24.

Purely by way of example, and as indicated in Fig. 11a, the contact portion 42 may comprise an annular member 80 with a slit 82 rendering the annular member 80 discontinuous. The annular member 80 is supported by the first wall compression portion 30, see Fig. 11b. The locking assembly 40 further comprises a mandrel 84 adapted to contact the second wall compression portion 36 and thereby force the contact portion 42 towards the first wall abutment portion 32 when the first wall compression portion 30 and the second wall compression portion 36 are located at the predetermined distance DA from each other in the axial direction A.

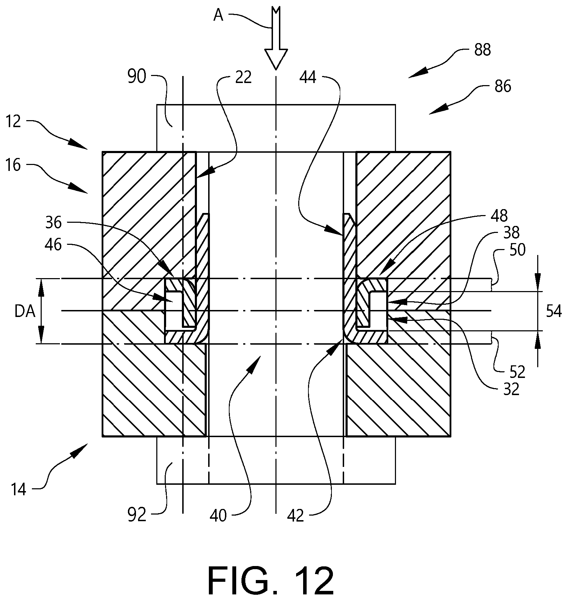

**FIG. 12** illustrates an example of a bolt joint assembly 86 comprising an assembly 12 and a bolt joint 88 with a bolt 90 extending through the assembly opening 22. The Fig. 12 bolt joint assembly 86 further comprises a nut 92 engaging with the bolt 90.

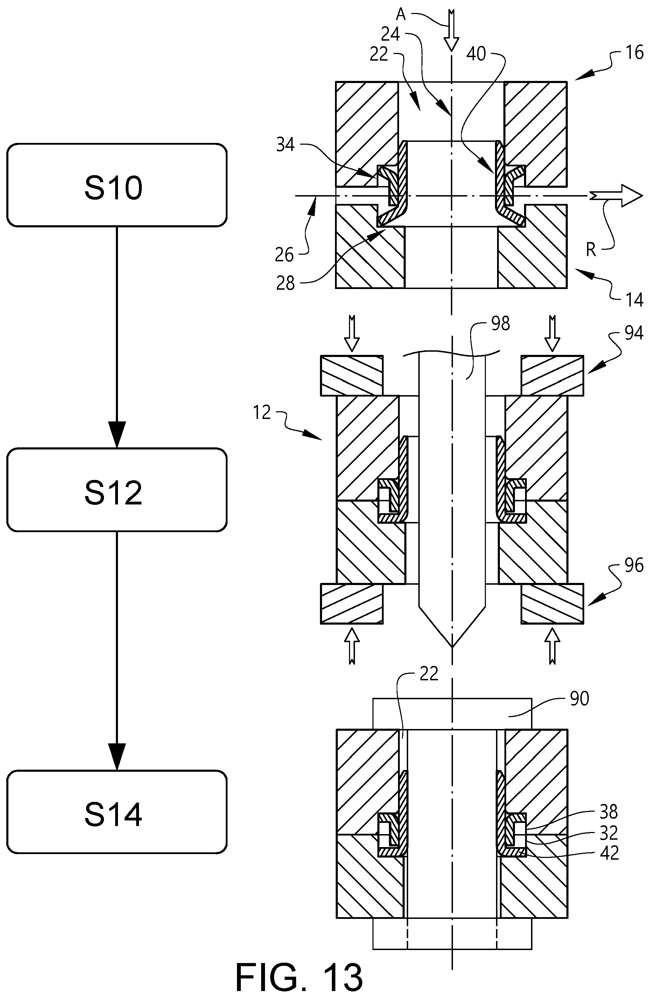

**FIG. 13** illustrates a flow chart of a method for forming an assembly 12 comprising a first member 14 and a second member 16. The assembly 12 comprises an assembly opening 22 extending through each one of the first and second members 14, 16. The assembly opening 22 extends in an axial direction A along an axial opening axis 22 as well as in a radial direction R along a radial opening axis 26.

The first member 14 comprises a first wall assembly 28 at least partially enclosing the assembly opening 22. The first wall assembly comprises a first wall compression portion 30 at least partially enclosing the assembly opening 22 and at least partially facing the second member 16. The first wall assembly 28 further comprises a first wall abutment portion 32 at least partially enclosing the assembly opening 22 and at least partially facing the axial opening axis 24. The first wall abutment portion 32 is at least partially located at a larger radial distance from the axial opening axis 24 than the first wall compression portion 30.

The second member 16 comprises a second wall assembly 34 at least partially enclosing the assembly opening. The second wall assembly comprises a second wall compression portion 36 at least partially enclosing the assembly opening 22 and at least partially facing the first member 14. The second wall assembly further comprises a second wall abutment portion 38 at least partially enclosing the assembly opening 22 and at least partially facing the axial opening axis 24. The second wall abutment portion 38 is at least partially located at a larger radial distance from the axial opening axis 24 than the second wall compression portion 36.

The above-mentioned features of the first member 14 and the second member 16, respectively, are illustrated in detail in e.g. Fig. 3.

The method comprises S10 inserting a locking assembly 40 at least partially between the first wall assembly 28 and the assembly opening 22 such that the locking assembly 40 also is at least partially located between the second wall assembly 34 and the assembly opening 22.

The method further comprises S12 actuating a pressing tool 94, 96 for applying a force to at least one of the first and second members 14, 16 forcing the first wall compression portion 30 and the second wall compression portion 36 towards each other until they are located at a predetermined distance DA from each other in the axial direction A, whereby the first wall compression portion 30 and the second wall compression portion 36 compress the locking assembly 40 such that at least a contact portion 42 of the locking assembly is bent towards and thereby abuts at least one of the first wall abutment portion 32 and the second wall abutment portion 38.

Moreover, in some examples, the method may comprises arranging a guide rod 98 at least partially into the assembly opening 22 when actuating the pressing tool 94, 96. Furthermore, in some examples, the method may comprise S14 inserting a bolt 90 into the assembly opening 22 after the contact portion 42 of the locking assembly 40 has been bent towards and thereby has abutted at least one of the first wall abutment portion 32 and the second wall abutment portion 38.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. An assembly (12) comprising a first member (14) and a second member (16), said assembly (12) comprising an assembly opening (22) extending through each one of said first and second member (14, 16), said assembly opening (22) extending in an axial direction (A) along an axial opening axis (24) as well as in a radial direction (R) along a radial opening axis (26),
- said first member (14) comprising a first wall assembly (28) at least partially enclosing said assembly opening (22), said first wall assembly (28) comprising a first wall compression portion (30) at least partially enclosing said assembly opening (22) and at least partially facing said second member (16), said first wall assembly (28) further comprising a first wall abutment portion (32) at least partially enclosing said assembly opening (22) and at least partially facing said axial opening axis (24), said first wall abutment portion (32) being at least partially located at a larger radial distance from said axial opening axis (24) than said first wall compression portion (30),
- said second member (16) comprising a second wall assembly (34) at least partially enclosing said assembly opening (22), said second wall assembly (34) comprising a second wall compression portion (36) at least partially enclosing said assembly opening (22) and at least partially facing said first member (14), said second wall assembly (34) further comprising a second wall abutment portion (38) at least partially enclosing said assembly opening (22) and at least partially facing said axial opening axis (24), said second wall abutment portion (38) being at least partially located at a larger radial distance from said axial opening axis (24) than said second wall compression portion (36),
said assembly (12) further comprising a locking assembly (40) being at least partially located between said first wall assembly (28) and said assembly opening (22) and also being at least partially located between said second wall assembly (34) and said assembly opening (22), said locking assembly (40) being such that when said first wall compression portion (30) and said second wall compression portion (36) are located at a predetermined distance (DA) from each other in said axial direction (A), said first wall compression portion (30) and said second wall compression portion (36) compress said locking assembly (40) such that at least a contact portion (42) of said locking assembly (40) is bent towards and thereby abuts at least one of said first wall abutment portion (32) and said second wall abutment portion (38).

2. The assembly (12) of claim 1, wherein said locking assembly (40) comprises a primary sleeve (44) at least partially enclosing said assembly opening (22), preferably said primary sleeve (44) is made of metal or a metal alloy, preferably said primary sleeve (44) and said contact portion (42) form a unitary component.

3. The assembly (12) of claim 2, wherein said locking assembly (40) comprises a second locking member (46) at least partially enclosing said primary sleeve (44), said second locking member (46) transferring a load from said second wall compression portion (36) to said contact portion (42) when said first wall compression portion (30) and said second wall compression portion (36) are located at said predetermined distance (DA) from each other in said axial direction (A), preferably said second locking member (46) and said primary sleeve (44) are separate components.

4. The assembly (12) of claim 3, wherein said second locking member (46) comprises a second contact portion (48) of said locking assembly (40) being bent towards and thereby abuts at least said second wall abutment portion (38) and wherein said contact portion (42) of said locking assembly (40) is bent towards and thereby abuts at least said first wall abutment portion (32), when said first wall compression portion (30) and said second wall compression portion (36) are located at said predetermined distance (DA) from each other in said axial direction (A), preferably said second contact portion (48) of said locking assembly (40) abuts at least said second wall abutment portion (38) at a second abutment zone (50) and wherein said contact portion (42) of said locking assembly (40) abuts at least said first wall abutment portion (32) at a first abutment zone (52), a smallest distance (54) between said second abutment zone (50) and said first abutment zone (52) in said axial direction (A) is greater than 30%, preferably greater than 50%, of the predetermined distance (DA) between said first wall compression portion (30) and said second wall compression portion (36), when said first wall compression portion (30) and said second wall compression portion (36) are located at said predetermined distance (DA) from each other in said axial direction (A).

5. The assembly (12) of claim 3, wherein said second locking member (46) comprises a second contact portion (48) of said locking assembly (40) being bent towards and thereby abuts said contact portion (42) and wherein said contact portion (42) of said locking assembly (40) is bent towards and thereby abuts each one of said first and second wall abutment portion (32, 38), when said first wall compression portion (30) and said second wall compression portion (36) are located at a predetermined distance (DA) from each other in said axial direction (A).

6. The assembly (12) of any one of the preceding claims, wherein said locking assembly (40) comprises a second contact portion (48), said locking assembly (40) being such that when said first wall compression portion (30) and said second wall compression portion (36) are located at a predetermined distance (DA) from each other in said axial direction (A), said first wall compression portion (30) and said second wall compression portion (36) compress said locking assembly (40) such that at least said contact portion (42) of said locking assembly (40) is bent towards and thereby abuts said first wall abutment portion (32) and such that at least said second contact portion (48) of said locking assembly (40) is bent towards and thereby abuts said second wall abutment portion (38), preferably said second contact portion (48) of said locking assembly (40) abuts at least said second wall abutment portion (38) at a second abutment zone (50) and wherein said contact portion (42) of said locking assembly (40) abuts at least said first wall abutment portion (32) at a first abutment zone (52), a smallest distance (54) between said second abutment zone (50) and said first abutment zone (52) being greater than 30%, preferably greater than 50%, of the predetermined distance (DA) between said first wall compression portion (30) and said second wall compression portion (36), when said first wall compression portion (30) and said second wall compression portion (36) are located at said predetermined distance (DA) from each other in said axial direction (A), preferably said contact portion (42) and said second contact portion (48) form a unitary component.

7. The assembly (12) of claim 6, wherein said assembly comprises a first circular sector (56) as well as a second circular sector (58), each one of which extending from said axial opening axis (24), wherein said first circular sector (56) includes said contact portion (42) but not said second contact portion (48) and wherein said second circular sector (58) includes said second contact portion (48) but not said first contact portion (42).

8. The assembly (12) of any one of claim 6 to claim 7, wherein said locking assembly (40) comprises a radial lock (62) for locking said contact portion (42) to said second contact portion (48) in at least said radial direction (R) when said first wall compression portion (30) and said second wall compression portion (36) are located at said predetermined distance (DA) from each other in said axial direction (A), preferably said radial lock (62) comprises a protrusion (66) extending from one of said contact portion (42) and said second contact portion (48) as well as a recess (68) into the other of said contact portion (42) and said second contact portion (48), said protrusion (66) being at least partially located in said recess (68) when said first wall compression portion (30) and said second wall compression portion (36) are located at said predetermined distance (DA) from each other in said axial direction (A).

9. The assembly (12) of any one of the preceding claims, wherein said contact portion (42) of said locking assembly (40) is bent around a bending axle being perpendicular to said axial opening axis (24).

10. The assembly (12) of any one of claim 1 to claim 2, wherein said contact portion (42) of said locking assembly (40) is bent around a bending axle (78) being parallel to said axial opening axis (24), preferably said contact portion (42) comprises an annular member (80) with a slit (82) rendering said annular member discontinuous, said annular member (80) being supported by said first wall compression portion (30), said locking assembly (40) further comprises a mandrel (84) adapted to contact said second wall compression portion (36) and thereby force said contact portion (42) towards said first wall abutment portion (32) when said first wall compression portion (30) and said second wall compression portion (36) are located at said predetermined distance (DA) from each other in said axial direction (A).

11. The assembly (12) of any one of the preceding claims, wherein said first member (14) is an axle body of a vehicle (10) and second member (16) is a suspension link of a vehicle (10).

12. A bolt joint assembly (86) comprising an assembly (12) according to any one of the preceding claims and a bolt joint (88) with a bolt (90) extending through said assembly opening (22).

13. A vehicle (10) comprising an assembly (12) according to any one of claims 1 - 11 and/or a bolt joint assembly (86) according to claim 12.

14. A method for forming an assembly (12) comprising a first member (14) and a second member (16), said assembly (12) comprising an assembly opening (22) extending through each one of said first and second members (14, 16), said assembly opening (22) extending in an axial direction (A) along an axial opening axis (24) as well as in a radial direction (R) along a radial opening axis (26),
- said first member (14) comprising a first wall assembly (28) at least partially enclosing said assembly opening (22), said first wall assembly (28) comprising a first wall compression portion (30) at least partially enclosing said assembly opening (22) and at least partially facing said second member (16), said first wall assembly (28) further comprising a first wall abutment portion (32) at least partially enclosing said assembly opening (22) and at least partially facing said axial opening axis (24), said first wall abutment portion (32) being at least partially located at a larger radial distance from said axial opening axis (24) than said first wall compression portion (30),
- said second member (16) comprising a second wall assembly (34) at least partially enclosing said assembly opening (22), said second wall assembly (34) comprising a second wall compression portion (36) at least partially enclosing said assembly opening (22) and at least partially facing said first member (14), said second wall assembly (34) further comprising a second wall abutment portion (38) at least partially enclosing said assembly opening (22) and at least partially facing said axial opening axis (24), said second wall abutment portion (38) being at least partially located at a larger radial distance from said axial opening axis (24) than said second wall compression portion (36),
wherein said method comprises inserting a locking assembly (40) at least partially between said first wall assembly (28) and said assembly opening (22) such that said locking assembly (40) also is at least partially located between said second wall assembly (34) and said assembly opening (22),
said method further comprising actuating a pressing tool (94, 96) for applying a force to at least one of said first and second members (14, 16) forcing said first wall compression portion (30) and said second wall compression portion (36) towards each other until they are located at a predetermined distance (DA) from each other in said axial direction (A), whereby said first wall compression portion (30) and said second wall compression portion (36) compress said locking assembly (40) such that at least a contact portion (42) of said locking assembly (40) is bent towards and thereby abuts at least one of said first wall abutment portion (32) and said second wall abutment portion (38).

15. The method according to claim 14, wherein said method comprises arranging a guide rod (98) at least partially into said assembly opening (22) when actuating said pressing tool (94, 96) and/or wherein said method comprises inserting a bolt (90) into said assembly opening (22) after said contact portion (42) of said locking assembly (40) has been bent towards and thereby has abutted at least one of said first wall abutment portion (32) and said second wall abutment portion (38).

## Patentansprüche

1. Baugruppe (12), umfassend ein erstes Element (14) und ein zweites Element (16), die Baugruppe (12) umfassend eine Baugruppenöffnung (22), die sich durch jedes des ersten und des zweiten Elements (14, 16) erstreckt, wobei sich die Baugruppenöffnung (22) in einer axialen Richtung (A) entlang einer axialen Öffnungsachse (24) sowie in einer radialen Richtung (R) entlang einer radialen Öffnungsachse (26) erstreckt,
- das erste Element (14) umfassend eine erste Wandbaugruppe (28), die die Baugruppenöffnung (22) mindestens teilweise umschließt, die erste Wandbaugruppe (28) umfassend einen ersten Wandkompressionsabschnitt (30), der die Baugruppenöffnung (22) mindestens teilweise umschließt und dem zweiten Element (16) mindestens teilweise zugewandt ist, die erste Wandbaugruppe (28) ferner umfassend einen ersten Wandanlageabschnitt (32), der die Baugruppenöffnung (22) mindestens teilweise umschließt und der axialen Öffnungsachse (24) mindestens teilweise zugewandt ist, wobei der erste Wandanlageabschnitt (32) mindestens teilweise in einem größeren radialen Abstand von der axialen Öffnungsachse (24) als der erste Wandkompressionsabschnitt (30) gelegen ist,
- das zweite Element (16) umfassend eine zweite Wandbaugruppe (34), die die Baugruppenöffnung (22) mindestens teilweise umschließt, die zweite Wandbaugruppe (34) umfassend einen zweiten Wandkompressionsabschnitt (36), der die Baugruppenöffnung (22) mindestens teilweise umschließt und dem ersten Element (14) mindestens teilweise zugewandt ist, die zweite Wandbaugruppe (34) ferner umfassend einen zweiten Wandanlageabschnitt (38), der die Baugruppenöffnung (22) mindestens teilweise umschließt und der axialen Öffnungsachse (24) mindestens teilweise zugewandt ist, wobei der zweite Wandanlageabschnitt (38) mindestens teilweise in einem größeren radialen Abstand von der axialen Öffnungsachse (24) als der zweite Wandkompressionsabschnitt (36) gelegen ist,
die Baugruppe (12) ferner umfassend eine Verriegelungsbaugruppe (40), die mindestens teilweise zwischen der ersten Wandbaugruppe (28) und der Baugruppenöffnung (22) gelegen ist und auch mindestens teilweise zwischen der zweiten Wandbaugruppe (34) und der Baugruppenöffnung (22) gelegen ist, wobei die Verriegelungsbaugruppe (40) derart ist, dass, wenn der erste Wandkompressionsabschnitt (30) und der zweite Wandkompressionsabschnitt (36) in einem zuvor bestimmten Abstand (DA) voneinander in der axialen Richtung (A) gelegen sind, der erste Wandkompressionsabschnitt (30) und der zweite Wandkompressionsabschnitt (36) die Verriegelungsbaugruppe (40) derart komprimieren, dass mindestens ein Kontaktabschnitt (42) der Verriegelungsbaugruppe (40) in Richtung mindestens eines von dem ersten Wandanlageabschnitt (32) und dem zweiten Wandanlageabschnitt (38) gebogen ist und dadurch an diesem anliegt.

2. Baugruppe (12) nach Anspruch 1, wobei die Verriegelungsbaugruppe (40) eine Primärhülse (44) umfasst, die die Baugruppenöffnung (22) mindestens teilweise umschließt, wobei die Primärhülse (44) vorzugsweise aus Metall oder einer Metalllegierung hergestellt ist, wobei die Primärhülse (44) und der Kontaktabschnitt (42) vorzugsweise eine einheitliche Komponente ausbilden.

3. Baugruppe (12) nach Anspruch 2, wobei die Verriegelungsbaugruppe (40) ein zweites Verriegelungselement (46) umfasst, das die Primärhülse (44) mindestens teilweise umschließt, wobei das zweite Verriegelungselement (46) eine Last von dem zweiten Wandkompressionsabschnitt (36) auf den Kontaktabschnitt (42) überträgt, wenn der erste Wandkompressionsabschnitt (30) und der zweite Wandkompressionsabschnitt (36) in der axialen Richtung (A) in dem zuvor bestimmten Abstand (DA) voneinander gelegen sind, wobei das zweite Verriegelungselement (46) und die Primärhülse (44) vorzugsweise separate Komponenten sind.

4. Baugruppe (12) nach Anspruch 3, wobei das zweite Verriegelungselement (46) einen zweiten Kontaktabschnitt (48) der Verriegelungsbaugruppe (40) umfasst, der in Richtung des zweiten Wandanlageabschnitts (38) gebogen ist und dadurch an diesem anliegt, und wobei der Kontaktabschnitt (42) der Verriegelungsbaugruppe (40) in Richtung des ersten Wandanlageabschnitts (32) gebogen ist und dadurch an diesem anliegt, wenn der erste
Wandkompressionsabschnitt (30) und der zweite Wandkompressionsabschnitt (36) in der axialen Richtung (A) in dem zuvor bestimmten Abstand (DA) voneinander gelegen sind, wobei der zweite Kontaktabschnitt (48) der Verriegelungsbaugruppe (40) vorzugsweise an einer zweiten Anlagezone (50) an mindestens dem zweiten Wandanlageabschnitt (38) anliegt und wobei der Kontaktabschnitt (42) der Verriegelungsbaugruppe (40) an einer ersten Anlagezone (52) an mindestens dem ersten Wandanlageabschnitt (32) anliegt, wobei ein kleinster Abstand (54) zwischen der zweiten Anlagezone (50) und der ersten Anlagezone (52) in der axialen Richtung (A) größer als 30 %, vorzugsweise größer als 50 % des zuvor bestimmten Abstands (DA) zwischen dem ersten Wandkompressionsabschnitt (30) und dem zweiten Wandkompressionsabschnitt (36) ist, wenn der erste Wandkompressionsabschnitt (30) und der zweite Wandkompressionsabschnitt (36) in der axialen Richtung (A) in dem zuvor bestimmten Abstand (DA) voneinander gelegen sind.

5. Baugruppe (12) nach Anspruch 3, wobei das zweite Verriegelungselement (46) einen zweiten Kontaktabschnitt (48) der Verriegelungsbaugruppe (40) umfasst, der in Richtung des Kontaktabschnitts (42) gebogen ist und dadurch an diesem anliegt, und wobei der Kontaktabschnitt (42) der Verriegelungsbaugruppe (40) in Richtung des ersten und des zweiten Wandanlageabschnitts (32, 38) gebogen ist und dadurch an jedem davon anliegt, wenn der erste Wandkompressionsabschnitt (30) und der zweite Wandkompressionsabschnitt (36) in der axialen Richtung (A) in einem zuvor bestimmten Abstand (DA) voneinander gelegen sind.

6. Baugruppe (12) nach einem der vorstehenden Ansprüche, wobei die Verriegelungsbaugruppe (40) einen zweiten Kontaktabschnitt (48) umfasst, wobei die Verriegelungsbaugruppe (40) derart ist, dass, wenn sich der erste Wandkompressionsabschnitt (30) und der zweite Wandkompressionsabschnitt (36) in einem zuvor bestimmten Abstand (DA) voneinander in der axialen Richtung (A) befinden, der erste Wandkompressionsabschnitt (30) und der zweite Wandkompressionsabschnitt (36) die Verriegelungsbaugruppe (40) derart komprimieren, dass mindestens der Kontaktabschnitt (42) der Verriegelungsbaugruppe (40) in Richtung des ersten Wandanlageabschnitts (32) gebogen ist und dadurch an diesem anliegt, und derart, dass mindestens der zweite Kontaktabschnitt (48) der Verriegelungsbaugruppe (40) in Richtung des zweiten Wandanlageabschnitts (38) gebogen ist und dadurch an diesem anliegt, wobei der zweite Kontaktabschnitt (48) der Verriegelungsbaugruppe (40) vorzugsweise an einer zweiten Anlagezone (50) an mindestens dem zweiten Wandanlageabschnitt (38) anliegt, und wobei der Kontaktabschnitt (42) der Verriegelungsbaugruppe (40) an einer ersten Anlagezone (52) mindestens an den ersten Wandanlageabschnitt (32) anliegt, wobei ein kleinster Abstand (54) zwischen der zweiten Anlagezone (50) und der ersten Anlagezone (52) größer als 30 %, vorzugsweise größer als 50 % des zuvor bestimmten Abstands (DA) zwischen dem ersten Wandkompressionsabschnitt (30) und dem zweiten Wandkompressionsabschnitt (36) ist, wenn der erste Wandkompressionsabschnitt (30) und der zweite Wandkompressionsabschnitt (36) in der axialen Richtung (A) in dem zuvor bestimmten Abstand (DA) voneinander gelegen sind, wobei der Kontaktabschnitt (42) und der zweite Kontaktabschnitt (48) vorzugsweise eine einheitliche Komponente ausbilden.

7. Baugruppe (12) nach Anspruch 6, wobei die Baugruppe einen ersten Kreissektor (56) sowie einen zweiten Kreissektor (58) umfasst, die sich jeweils von der axialen Öffnungsachse (24) erstrecken, wobei der erste Kreissektor (56) den Kontaktabschnitt (42), jedoch nicht den zweiten Kontaktabschnitt (48) einschließt, und wobei der zweite Kreissektor (58) den zweiten Kontaktabschnitt (48), jedoch nicht den ersten Kontaktabschnitt (42) einschließt.

8. Baugruppe (12) nach einem der Ansprüche 6 bis 7, wobei die Verriegelungsbaugruppe (40) eine radiale Verriegelung (62) zum Verriegeln des Kontaktabschnitts (42) mit dem zweiten Kontaktabschnitt (48) mindestens in der radialen Richtung (R) umfasst, wenn der erste Wandkompressionsabschnitt (30) und der zweite Wandkompressionsabschnitt (36) in der axialen Richtung (A) in dem zuvor bestimmten Abstand (DA) voneinander gelegen sind, wobei die radiale Verriegelung (62) vorzugsweise einen Vorsprung (66), der sich von einem des Kontaktabschnitts (42) und des zweiten Kontaktabschnitts (48) erstreckt, sowie eine Aussparung (68) in den anderen des Kontaktabschnitts (42) und des zweiten Kontaktabschnitts (48) umfasst, wobei der Vorsprung (66) mindestens teilweise in der Aussparung (68) gelegen ist, wenn der erste Wandkompressionsabschnitt (30) und der zweite Wandkompressionsabschnitt (36) in der axialen Richtung (A) in dem zuvor bestimmten Abstand (DA) voneinander gelegen sind.

9. Baugruppe (12) nach einem der vorstehenden Ansprüche, wobei der Kontaktabschnitt (42) der Verriegelungsbaugruppe (40) um eine Biegeachse herum gebogen ist, die senkrecht zu der axialen Öffnungsachse (24) ist.

10. Baugruppe (12) nach einem der Ansprüche 1 bis 2, wobei der Kontaktabschnitt (42) der Verriegelungsbaugruppe (40) um eine Biegeachse (78) herum gebogen ist, die parallel zu der axialen Öffnungsachse (24) ist, der Kontaktabschnitt (42) vorzugsweise ein ringförmiges Element (80) mit einem Schlitz (82) umfasst, der das ringförmige Element unterbrochen macht, wobei das ringförmige Element (80) durch den ersten Wandkompressionsabschnitt (30) getragen wird, wobei die Verriegelungsbaugruppe (40) ferner einen Dorn (84) umfasst, der angepasst ist, um den zweiten Wandkompressionsabschnitt (36) zu kontaktieren und dadurch den Kontaktabschnitt (42) in Richtung des ersten Wandanlageabschnitts (32) zu drücken, wenn der erste Wandkompressionsabschnitt (30) und der zweite Wandkompressionsabschnitt (36) in der axialen Richtung (A) in dem zuvor bestimmten Abstand (DA) voneinander gelegen sind.

11. Baugruppe (12) nach einem der vorstehenden Ansprüche, wobei das erste Element (14) ein Achskörper eines Fahrzeugs (10) ist und das zweite Element (16) ein Achslenker eines Fahrzeugs (10) ist.

12. Schraubverbindungsbaugruppe (86), umfassend eine Baugruppe (12) nach einem der vorstehenden Ansprüche und eine Schraubverbindung (88) mit einer Schraube (90), die sich durch die Baugruppenöffnung (22) erstreckt.

13. Fahrzeug (10), umfassend eine Baugruppe (12) nach einem der Ansprüche 1 bis 11 und/oder eine Schraubverbindungsbaugruppe (86) nach Anspruch 12.

14. Verfahren zum Ausbilden einer Baugruppe (12), umfassend ein erstes Element (14) und ein zweites Element (16), die Baugruppe (12) umfassend eine Baugruppenöffnung (22), die sich durch jedes des ersten und des zweiten Elements (14, 16) erstreckt, wobei sich die Baugruppenöffnung (22) in einer axialen Richtung (A) entlang einer axialen Öffnungsachse (24) sowie in einer radialen Richtung (R) entlang einer radialen Öffnungsachse (26) erstreckt,
- das erste Element (14) umfassend eine erste Wandbaugruppe (28), die die Baugruppenöffnung (22) mindestens teilweise umschließt, die erste Wandbaugruppe (28) umfassend einen ersten Wandkompressionsabschnitt (30), der die Baugruppenöffnung (22) mindestens teilweise umschließt und mindestens teilweise dem zweiten Element (16) zugewandt ist, die erste Wandbaugruppe (28) ferner umfassend einen ersten Wandanlageabschnitt (32), der die Baugruppenöffnung (22) mindestens teilweise umschließt und mindestens teilweise der axialen Öffnungsachse (24) zugewandt ist, wobei der erste Wandanlageabschnitt (32) mindestens teilweise in einem größeren radialen Abstand von der axialen Öffnungsachse (24) als der erste Wandkompressionsabschnitt (30) gelegen ist,
- das zweite Element (16) umfassend eine zweite Wandbaugruppe (34), die die Baugruppenöffnung (22) mindestens teilweise umschließt, die zweite Wandbaugruppe (34) umfassend einen zweiten Wandkompressionsabschnitt (36), der die Baugruppenöffnung (22) mindestens teilweise umschließt und mindestens teilweise dem ersten Element (14) zugewandt ist, die zweite Wandbaugruppe (34) ferner umfassend einen zweiten Wandanlageabschnitt (38), der die Baugruppenöffnung (22) mindestens teilweise umschließt und mindestens teilweise der axialen Öffnungsachse (24) zugewandt ist, wobei der zweite Wandanlageabschnitt (38) mindestens teilweise in einem größeren radialen Abstand von der axialen Öffnungsachse (24) als der zweite Wandkompressionsabschnitt (36) gelegen ist,
wobei das Verfahren ein Einfügen einer Verriegelungsbaugruppe (40) mindestens teilweise zwischen der ersten Wandbaugruppe (28) und der Baugruppenöffnung (22) derart umfasst, dass die Verriegelungsbaugruppe (40) auch mindestens teilweise zwischen der zweiten Wandbaugruppe (34) und der Baugruppenöffnung (22) gelegen ist,
das Verfahren ferner umfassend ein Betätigen eines Presswerkzeugs (94, 96) zum Aufbringen einer Kraft auf mindestens eines des ersten und des zweiten Elements (14, 16), wobei der erste Wandkompressionsabschnitt (30) und der zweite Wandkompressionsabschnitt (36) aufeinander zu gepresst werden, bis sie in der axialen Richtung (A) in einem zuvor bestimmten Abstand (DA) voneinander gelegen sind, wodurch der erste Wandkompressionsabschnitt (30) und der zweite Wandkompressionsabschnitt (36) die Verriegelungsbaugruppe (40) derart komprimieren, dass mindestens ein Kontaktabschnitt (42) der Verriegelungsbaugruppe (40) in Richtung mindestens eines des ersten Wandanlageabschnitts (32) und des zweiten Wandanlageabschnitts (38) gebogen ist und dadurch an diesem anliegt.

15. Verfahren nach Anspruch 14, wobei das Verfahren ein Anordnen einer Führungsstange (98) mindestens teilweise in der Baugruppenöffnung (22) umfasst, wenn das Presswerkzeug (94, 96) betätigt wird, und/oder wobei das Verfahren das Einführen einer Schraube (90) in die Baugruppenöffnung (22) umfasst, nachdem der Kontaktabschnitt (42) der Verriegelungsbaugruppe (40) in Richtung mindestens eines des ersten Wandanlageabschnitts (32) und des zweiten Wandanlageabschnitts (38) gebogen wurde und dadurch an diesem anliegt.

## Revendications

1. Ensemble (12) comprenant un premier élément (14) et un second élément (16), ledit ensemble (12) comprenant une ouverture d'ensemble (22) s'étendant à travers chacun parmi ledit premier et ledit second élément (14, 16), ladite ouverture d'ensemble (22) s'étendant dans une direction axiale (A) le long d'un axe d'ouverture axial (24) ainsi que dans une direction radiale (R) le long d'un axe d'ouverture radial (26),
- ledit premier élément (14) comprenant un premier ensemble paroi (28) enfermant au moins partiellement ladite ouverture d'ensemble (22), ledit premier ensemble paroi (28) comprenant une première partie de compression de paroi (30) enfermant au moins partiellement ladite ouverture d'ensemble (22) et faisant face au moins partiellement vers ledit second élément (16), ledit premier ensemble paroi (28) comprenant en outre une première partie de butée de paroi (32) enfermant au moins partiellement ladite ouverture d'ensemble (22) et faisant face au moins partiellement vers ledit axe d'ouverture axial (24), ladite première partie de butée de paroi (32) étant au moins partiellement localisée à une plus grande distance radiale dudit axe d'ouverture axial (24) que ladite première partie de compression de paroi (30),
- ledit second élément (16) comprenant un second ensemble paroi (34) enfermant au moins partiellement ladite ouverture d'ensemble (22), ledit second ensemble paroi (34) comprenant une seconde partie de compression de paroi (36) enfermant au moins partiellement ladite ouverture d'ensemble (22) et faisant face au moins partiellement vers ledit premier élément (14), ledit second ensemble paroi (34) comprenant en outre une seconde partie de butée de paroi (38) enfermant au moins partiellement ladite ouverture d'ensemble (22) et faisant face au moins partiellement vers ledit axe d'ouverture axial (24), ladite seconde partie de butée de paroi (38) étant au moins partiellement localisée à une plus grande distance radiale dudit axe d'ouverture axial (24) que ladite seconde partie de compression de paroi (36),
ledit ensemble (12) comprenant en outre un ensemble de verrouillage (40) étant au moins partiellement localisé entre ledit premier ensemble paroi (28) et ladite ouverture d'ensemble (22) et étant également au moins partiellement localisé entre ledit second ensemble paroi (34) et ladite ouverture d'ensemble (22), ledit ensemble de verrouillage (40) étant tel que lorsque ladite première partie de compression de paroi (30) et ladite seconde partie de compression de paroi (36) sont localisées à une distance prédéterminée (DA) l'une de l'autre dans ladite direction axiale (A), ladite première partie de compression de paroi (30) et ladite seconde partie de compression de paroi (36) compressent ledit ensemble de verrouillage (40) de telle sorte qu'au moins une partie de contact (42) dudit ensemble de verrouillage (40) est pliée en direction de, et vient de ce fait en butée contre, au moins l'une parmi ladite première partie de compression de paroi (32) et ladite seconde partie de butée de paroi (38).

2. Ensemble (12) selon la revendication 1, dans lequel ledit ensemble de verrouillage (40) comprend un manchon primaire (44) enfermant au moins partiellement ladite ouverture d'ensemble (22), de préférence ledit manchon primaire (44) est constitué de métal ou d'un alliage métallique, de préférence ledit manchon primaire (44) et ladite partie de contact (42) forment un composant monobloc.

3. Ensemble (12) selon la revendication 2, dans lequel ledit ensemble de verrouillage (40) comprend un second élément de verrouillage (46) enfermant au moins partiellement ledit manchon primaire (44), ledit second élément de verrouillage (46) transférant une charge de ladite seconde partie de compression de paroi (36) à ladite partie de contact (42) lorsque ladite première partie de compression de paroi (30) et ladite seconde partie de compression de paroi (36) sont localisées à ladite distance prédéterminée (DA) l'une de l'autre dans ladite direction axiale (A), de préférence ledit second élément de verrouillage (46) et ledit manchon primaire (44) sont des composants séparés.

4. Ensemble (12) selon la revendication 3, dans lequel ledit second élément de verrouillage (46) comprend une seconde partie de contact (48) dudit ensemble de verrouillage (40) étant pliée en direction de, et venant en butée contre, au moins ladite seconde partie de butée de paroi (38) et dans lequel ladite partie de contact (42) dudit ensemble de verrouillage (40) est pliée en direction de, et vient de ce fait en butée contre, au moins ladite première partie de butée de paroi (32), lorsque ladite première partie de compression de paroi (30) et ladite seconde partie de compression de paroi (36) sont localisées à ladite distance prédéterminée (DA) l'une de l'autre dans ladite direction axiale (A), de préférence ladite seconde partie de contact (48) dudit ensemble de verrouillage (40) vient en butée au moins contre ladite seconde partie de butée de paroi (38) au niveau d'une seconde zone de butée (50) et dans lequel ladite partie de contact (42) dudit ensemble de verrouillage (40) vient en butée au moins contre ladite première partie de butée de paroi (32) au niveau d'une première zone de butée (52), une distance la plus petite (54) entre ladite seconde zone de butée (50) et ladite première zone de butée (52) dans ladite direction axiale (A) est supérieure à 30 %, de préférence supérieure à 50 %, de la distance prédéterminée (DA) entre ladite première partie de compression de paroi (30) et ladite seconde partie de compression de paroi (36), lorsque ladite première partie de compression de paroi (30) et ladite seconde partie de compression de paroi (36) sont localisées à ladite distance prédéterminée (DA) l'une de l'autre dans ladite direction axiale (A).

5. Ensemble (12) selon la revendication 3, dans lequel ledit second élément de verrouillage (46) comprend une seconde partie de contact (48) dudit ensemble de verrouillage (40) étant pliée en direction de, et venant de ce fait en butée contre, ladite partie de contact (42) et dans lequel ladite partie de contact (42) dudit ensemble de verrouillage (40) est pliée en direction de, et vient de ce fait en butée contre, chacune parmi ladite première et ladite seconde partie de butée de paroi (32, 38), lorsque ladite première partie de compression de paroi (30) et ladite seconde partie de compression de paroi (36) sont localisées à une distance prédéterminée (DA) l'une de l'autre dans ladite direction axiale (A).

6. Ensemble (12) selon l'une quelconque des revendications précédentes, dans lequel ledit ensemble de verrouillage (40) comprend une seconde partie de contact (48), ledit ensemble de verrouillage (40) étant tel que lorsque ladite première partie de compression de paroi (30) et ladite seconde partie de compression de paroi (36) sont localisées à une distance prédéterminée (DA) l'une de l'autre dans ladite direction axiale (A), ladite première partie de compression de paroi (30) et ladite seconde partie de compression de paroi (36) compressent ledit ensemble de verrouillage (40) de telle sorte qu'au moins ladite partie de contact (42) dudit ensemble de verrouillage (40) est pliée en direction de, et vient de ce fait en butée contre, ladite première partie de butée de paroi (32) et de telle sorte qu'au moins ladite seconde partie de contact (48) dudit ensemble de verrouillage (40) est pliée en direction de, et vient de ce fait en butée contre, ladite seconde partie de butée de paroi (38), de préférence ladite seconde partie de contact (48) dudit ensemble de verrouillage (40) vient en butée au moins contre ladite seconde partie de butée de paroi (38) au niveau d'une seconde zone de butée (50) et dans lequel ladite partie de contact (42) dudit ensemble de verrouillage (40) vient en butée au moins contre ladite première partie de butée de paroi (32) au niveau d'une première zone de butée (52), une distance la plus petite (54) entre ladite seconde zone de butée (50) et ladite première zone de butée (52) étant supérieure à 30 %, de préférence supérieure à 50 %, de la distance prédéterminée (DA) entre ladite première partie de compression de paroi (30) et ladite seconde partie de compression de paroi (36), lorsque ladite première partie de compression de paroi (30) et ladite seconde partie de compression de paroi (36) sont localisées à ladite distance prédéterminée (DA) l'une de l'autre dans ladite direction axiale (A), de préférence ladite partie de contact (42) et ladite seconde partie de contact (48) forment un composant monobloc.

7. Ensemble (12) selon la revendication 6, dans lequel ledit ensemble comprend un premier secteur circulaire (56) ainsi qu'un second secteur circulaire (58), dont chacun s'étend à partir dudit axe d'ouverture axial (24), dans lequel ledit premier secteur circulaire (56) comporte ladite partie de contact (42) mais pas ladite seconde partie de contact (48) et dans lequel ledit second secteur circulaire (58) comporte ladite seconde partie de contact (48) mais pas ladite première partie de contact (42).

8. Ensemble (12) selon l'une quelconque de la revendication 6 à la revendication 7, dans lequel ledit ensemble de verrouillage (40) comprend un verrou radial (62) permettant de verrouiller ladite partie de contact (42) à ladite seconde partie de contact (48) au moins dans ladite direction radiale (R) lorsque ladite première partie de compression de paroi (30) et ladite seconde partie de compression de paroi (36) sont localisées à ladite distance prédéterminée (DA) l'une de l'autre dans ladite direction axiale (A), de préférence ledit verrou radial (62) comprend une protubérance (66) s'étendant à partir de l'une parmi ladite partie de contact (42) et ladite seconde partie de contact (48) ainsi qu'un évidement (68) dans l'autre parmi ladite partie de contact (42) et ladite seconde partie de contact (48), ladite protubérance (66) étant au moins partiellement localisée dans ledit renfoncement (68) lorsque ladite première partie de compression de paroi (30) et ladite seconde partie de compression de paroi (36) sont localisées à ladite distance prédéterminée (DA) l'une de l'autre dans ladite direction axiale (A).

9. Ensemble (12) selon l'une quelconque des revendications précédentes, dans lequel ladite partie de contact (42) dudit ensemble de verrouillage (40) est pliée autour d'un essieu de pliage étant perpendiculaire audit axe d'ouverture axial (24).

10. Ensemble (12) selon l'une quelconque de la revendication 1 à la revendication 2, dans lequel ladite partie de contact (42) dudit ensemble de verrouillage (40) est pliée autour d'un essieu de pliage (78) étant parallèle audit axe d'ouverture axial (24), de préférence ladite partie de contact (42) comprend un élément annulaire (80) avec une fente (82) rendant ledit élément annulaire discontinu, ledit élément annulaire (80) étant supporté par ladite première partie de compression de paroi (30), ledit ensemble de verrouillage (40) comprend en outre un mandrin (84) conçu pour venir en contact avec ladite seconde partie de compression de paroi (36) et forcer de ce fait ladite partie de contact (42) en direction de ladite première partie de butée de paroi (32) lorsque ladite première partie de compression de paroi (30) et ladite seconde partie de compression de paroi (36) sont localisées à ladite distance prédéterminée (DA) l'une de l'autre dans ladite direction axiale (A).

11. Ensemble (12) selon l'une quelconque des revendications précédentes, dans lequel ledit premier élément (14) est un corps d'essieu d'un véhicule (10) et le second élément (16) est un bras de suspension d'un véhicule (10).

12. Ensemble raccord à boulon (86) comprenant un ensemble (12) selon l'une quelconque des revendications précédentes et un raccord à boulon (88) avec un boulon (90) s'étendant à travers ladite ouverture d'ensemble (22).

13. Véhicule (10) comprenant un ensemble (12) selon l'une quelconque des revendications 1 à 11 et/ou un ensemble raccord à boulon (86) selon la revendication 12.

14. Procédé permettant de former un ensemble (12) comprenant un premier élément (14) et un second élément (16), ledit ensemble (12) comprenant une ouverture d'ensemble (22) s'étendant à travers chacun parmi lesdits premier et second éléments (14, 16), ladite ouverture d'ensemble (22) s'étendant dans une direction axiale (A) le long d'un axe d'ouverture axial (24) ainsi que dans une direction radiale (R) le long d'un axe d'ouverture radial (26),
- ledit premier élément (14) comprenant un premier ensemble paroi (28) enfermant au moins partiellement ladite ouverture d'ensemble (22), ledit premier ensemble paroi (28) comprenant une première partie de compression de paroi (30) enfermant au moins partiellement ladite ouverture d'ensemble (22) et faisant face au moins partiellement vers ledit second élément (16), ledit premier ensemble paroi (28) comprenant en outre une première partie de butée de paroi (32) enfermant au moins partiellement ladite ouverture d'ensemble (22) et faisant face au moins partiellement vers ledit axe d'ouverture axial (24), ladite première partie de butée de paroi (32) étant au moins partiellement localisée à une plus grande distance radiale dudit axe d'ouverture axial (24) que ladite première partie de compression de paroi (30),
- ledit second élément (16) comprenant un second ensemble paroi (34) enfermant au moins partiellement ladite ouverture d'ensemble (22), ledit second ensemble paroi (34) comprenant une seconde partie de compression de paroi (36) enfermant au moins partiellement ladite ouverture d'ensemble (22) et faisant face au moins partiellement vers ledit premier élément (14), ledit second ensemble paroi (34) comprenant en outre une seconde partie de butée de paroi (38) enfermant au moins partiellement ladite ouverture d'ensemble (22) et faisant face au moins partiellement vers ledit axe d'ouverture axial (24), ladite seconde partie de butée de paroi (38) étant au moins partiellement localisée à une plus grande distance radiale dudit axe d'ouverture axial (24) que ladite seconde partie de compression de paroi (36),
dans lequel ledit procédé comprend l'insertion d'un ensemble de verrouillage (40) au moins partiellement entre ledit premier ensemble paroi (28) et ladite ouverture d'ensemble (22) de telle sorte que ledit ensemble de verrouillage (40) est également localisé au moins partiellement entre ledit second ensemble paroi (34) et ladite ouverture d'ensemble (22),
ledit procédé comprenant en outre l'actionnement d'un outil de pressage (94, 96) permettant d'appliquer une force à au moins l'un desdits premier et second éléments (14, 16) forçant ladite première partie de compression de paroi (30) et ladite seconde partie de compression de paroi (36) l'une vers l'autre jusqu'à ce qu'elles soient localisées à une distance prédéterminée (DA) l'une de l'autre dans ladite direction axiale (A), moyennant quoi ladite première partie de compression de paroi (30) et ladite seconde partie de compression de paroi (36) compressent ledit ensemble de verrouillage (40) de telle sorte qu'au moins une partie de contact (42) dudit ensemble de verrouillage (40) est pliée en direction de, et vient de ce fait en butée contre, au moins l'une parmi ladite première partie de compression de paroi (32) et ladite seconde partie de butée de paroi (38).

15. Procédé selon la revendication 14, dans lequel ledit procédé comprend l'agencement d'une tige de guidage (98) au moins partiellement dans ladite ouverture d'ensemble (22) lors de l'actionnement dudit outil de pressage (94, 96) et/ou dans lequel ledit procédé comprend l'insertion d'un boulon (90) dans ladite ouverture d'ensemble (22) après que ladite partie de contact (42) dudit ensemble de verrouillage (40) a été pliée en direction de, et est de ce fait venue en butée contre, au moins l'une parmi ladite première partie de compression de paroi (32) et ladite seconde partie de butée de paroi (38).
